# EUROPÄISCHE PATENTSCHRIFT

(11) **EP 1 332 374 B1**
(45) Veröffentlichungstag und Bekanntmachung des Hinweises auf die Patenterteilung: **18.01.2006**
(21) Anmeldenummer: 01944967.7
(22) Anmeldetag: 01.06.2001
(51) Int. Cl.: G01P 15/13

(54) **VERFAHREN UND VORRICHTUNG ZUM ELEKTRISCHEN NULLPUNKTABGLEICH FÜR EIN MIKROMECHANISCHES BAUELEMENT**
METHOD AND DEVICE FOR ELECTRICAL ZERO BALANCING FOR A MICROMECHANICAL COMPONENT
PROCEDE ET DISPOSITIF DE REGLAGE ELECTRIQUE DU ZERO POUR UN COMPOSANT MICROMECANIQUE

(30) Priorität: 06.10.2000 DE 10049462
(43) Veröffentlichungstag der Anmeldung: 06.08.2003
(73) Patentinhaber: ROBERT BOSCH GMBH, 70442 Stuttgart (DE)
(72) Erfinder: TANTEN, Leo, 72768 Reutlingen (DE); FRANZ, Jochen, 72762 Reutlingen (DE); SCHOEFTHALER, Martin, 72762 Reutlingen (DE); ROHR, Marius, 72760 Reutlingen (DE); EMMERICH, Harald, 88471 Laupheim (DE); HAUTE, Matthias, 72072 Tuebingen (DE); WALKER, Thomas, 72127 Kusterdingen (DE)
(86) Internationale Anmeldenummer: PCT/DE2001/002066
(87) Internationale Veröffentlichungsnummer: WO 2002/029421

(56) Entgegenhaltungen:
- WO-A-93/21536
- US-A- 5 618 989

## Beschreibung

### STAND DER TECHNIK

Die vorliegende Erfindung betrifft ein Verfahren und eine Vorrichtung zum elektrischen Nullpunktabgleich für ein mikromechanisches Bauelement mit einer ersten über einem Substrat fest aufgehängten Kondensatorelektrode, einer zweiten über dem Substrat fest aufgehängten Kondensatorelektrode und einer dritten dazwischen angeordneten über dem Substrat federnd auslenkbar aufgehängten Kondensatorelektrode, und einer Differenzkapazitäts-Erfassungseinrichtung zum Erfassen einer Differenzkapazität der Kapazitäten der derart gebildeten veränderlichen Kondensatoren.

Obwohl auf beliebige mikromechanische Bauelemente und Strukturen, insbesondere Sensoren und Aktuatoren, anwendbar, werden die vorliegende Erfindung sowie die ihr zugrundeliegende Problematik in bezug auf einen in der Technologie der Silizium-Oberflächenmikromechanik herstellbaren mikromechanischen Coriolis-Beschleunigungssensor eines Drehratensensors erläutert.

Beschleunigungssensoren im allgemeinen, und insbesondere mikromechanische Beschleunigungssensoren in der Technologie der Oberflächen- bzw. Volumenmikromechanik, gewinnen immer größere Marktsegmente im Kraftfahrzeugausstattungsbereich und ersetzen in zunehmendem Maße die bisher üblichen piezoelektrischen Beschleunigungssensoren.

Die bekannten mikromechanischen Beschleunigungssensoren funktionieren üblicherweise derart, daß die federnd gelagerte seismische Masseneinrichtung, welche durch eine externe Beschleunigung in mindestens eine Richtung auslenkbar ist, bei Auslenkung eine Kapazitätsänderung an einer damit verbundenen Differentialkondensatoreinrichtung bewirkt, die ein Maß für die Beschleunigung ist. Diese Elemente sind üblicherweise in Polysilizium, z.B. Epitaxie-Polysilizium, über einer Opferschicht aus Oxid strukturiert.

Mikromechanische Sensorelemente werden allgemein aber nicht nur zur Detektion von linearen und rotativen Beschleunigungen, sondern auch zur Detektion von Neigungen und Rotationsgeschwindigkeiten verwendet. Meist findet dabei das besagte differenzkapazitive Messprinzip Anwendung, bei dem die Messgröße, beispielsweise die Beschleunigung, eine Lageänderung einer beweglichen Kondensatorelektrode einer mikromechanischen Sensorstruktur hervorruft, wodurch durch zwei entsprechende feststehende Kondensatorelektroden, welche beiderseits der beweglichen Kondensatorelektrode angeordnet sind, gegenläufig ihrer elektrischen Messkapazitätenwerte ändern. Mit anderen Worten nimmt die Kapazität des einen Kondensators um einen bestimmten Betrag zu, und die Kapazität des anderen derart gebildeten Kondensators um einen entsprechenden Wert ab, und zwar aufgrund entsprechender Änderungen der Kondensatorelektrodenabstände.

Kleinste Unsymmetrien in der Nulllage solcher Messstrukturen oder in den parasitären Kapazitätsanteilen des betreffenden mikromechanischen Sensorelement führen dabei zu einem elektrischen Offset bzw. einer elektrischen Nullpunktverschiebung am Ausgang des Sensorelements. Solch ein Offset wird üblicherweise beim individuellen Sensorabgleich durch Addition einer entsprechenden Spannung bzw. eines entsprechenden Stroms im betreffenden Signalpfad der Differenzkapazität-Erfassungseinrichtung kompensiert.

Durch solch ein Eingriff in den betreffenden Signalpfad beim Offsetabgleich des Sensors können unbeabsichtigt wichtige andere Funktionsparameter negativ beeinflusst werden, beispielsweise können Temperaturgänge im Offset entstehen oder eine gleichzeitige Änderung der Signalverstärkungen und der Sensorempfindlichkeit o.ä. auftreten. Dies führt dann zu weiteren Kompensation- und Abgleichanforderungen und erhöht den Sensorabgleichaufwand erheblich.

Des weiteren ist die Stufung eines derartigen Offsetabgleichs von der Gesamtverstärkung des betreffenden Signalpfads abhängig, beispielsweise von der abzugleichenden Nennempfindlichkeit, sofern zumindest ein Teil des Verstärkungsabgleichs erst hinter dem Offsetkompensationspunkt durchgeführt wird.

### VORTEILE DER ERFINDUNG

Das erfindungsgemäße Verfahren zum elektrischen Nullpunktabgleich für ein mikromechanisches Bauelement mit den Nerkmalen des Anspruchs 1 bzw. die entsprechende Vorrichtung nach Anspruch 4 weisen den Vorteil auf, daß der Offsetabgleich bzw. Nullpunktabgleich eines mikromechanischen, kapazitiv ausgewerteten Sensorelements außerhalb des empfindlichen Signalpfads, d.h. unabhängig von Verstärkungsfaktoren, und ohne Einbringen parasitärer Signalverzerrungen, z.B. durch Temperaturgänge, erfolgen kann.

Die der vorliegenden Erfindung zugrundeliegende Idee besteht darin, daß das an das Substrat angelegte vierte elektrische Potential zum elektrischen Nullpunktabgleich für den Betrieb der Differenzkapazitäts-Erfassungseinrichtung verändert wird.

In den Unteransprüchen finden sich vorteilhafte Weiterbildungen und Verbesserungen des jeweiligen Gegenstandes der Erfindung.

Gemäß einer bevorzugten Weiterbildung sind die zur Differenzkapazitäts-Erfassung erforderlichen Potentiale getaktet anlegbar.

Gemäß einer weiteren bevorzugten Weiterbildung weist das mikromechanische Bauelement eine Interdigital-Kondensatoreinrichtung mit einer Vielzahl von beweglichen und festen Kondensatorelektroden auf.

### ZEICHNUNGEN

Ein Ausführungsbeispiel der Erfindung ist in den Zeichnungen dargestellt und in der nachfolgenden Beschreibung näher erläutert.

Es zeigen:
- Fig. 1: eine partielle Schnittdarstellung von einem Beschleunigungssensor gemäß einer Ausführungsform der vorliegenden Erfindung bei einem ersten Substratpotential; und
- Fig. 2: eine partielle Schnittdarstellung von dem Beschleunigungssensor gemäß der Ausführungsform der vorliegenden Erfindung bei einem zweiten Substratpotential.

### BESCHREIBUNG DER AUSFÜHRUNGSBEISPIELE

In den Figuren bezeichnen gleiche Bezugszeichen gleiche oder funktionsgleiche Komponenten.

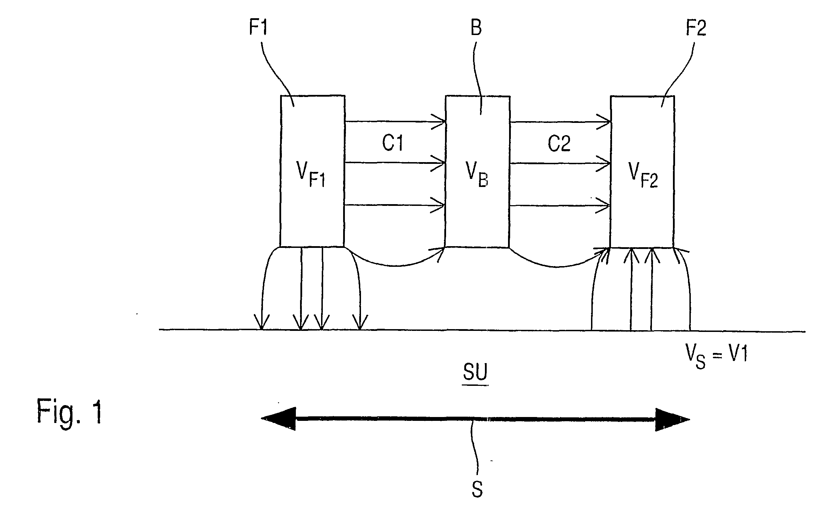

Fig. 1 zeigt eine partielle Schnittdarstellung von einem Beschleunigungssensor gemäß einer Ausführungsform der vorliegenden Erfindung bei einem ersten Substratpotential. Die in Figur 1 gezeigte schematische Schnittdarstellung illustriert drei Kondensatorelektroden für eine differenzkapazitive Signalauswertung.

Dabei bezeichnen in Fig. 1 F1 eine erste über einem Substrat SU fest aufgehängte Kondensatorelektrode, F2 eine zweite über dem Substrat SU fest aufgehängte Kondensatorelektrode und B eine dritte dazwischen angeordnete über dem Substrat SU auslenkbar aufgehängte Kondensatorelektrode. Die dritte Kondensatorelektrode B ist über eine Federeinrichtung in ihre Ruhelage zurückbringbar.

Die drei Elektroden F1, B, F2 sind mit einer (nicht gezeigten) Differenzkapazitäts-Erfassungseinrichtung zum Erfassen einer Differenzkapazität der Kapazitäten C1, C2 der derart gebildeten veränderlichen Kondensatoren F1, B; B, F2 verbunden.

An der ersten feststehenden Kondensatorelektrode F1 liegt das elektrische Potential V_{F1}, an der zweiten Kondensatorelektrode F2 liegt das elektrische Potential V_{F2}, und an der dritten Kondensatorelektrode liegt das elektrische Potential V_{B}. Beispielsweise ist V_{F1} = 5 V, V_{F2} = 0 V und V_{B} = 2,5 V. Weiterhin liegt am Substrat SU das elektrische Potential V_{S} = V1 von z.B. 2,5 V. Schematisch angedeutet in Figur 1 ist weiterhin das sich daraus ergebene elektrische Feldlinienbild. Der Doppelpfeil in Figur deutet die Erfassungsrichtungen für Auslenkungen der beweglichen dritten Kondensatorelektrode B an.

Die zur Kapazitätsmessung erforderlichen Potentiale werden dabei in der Praxis auf den Kondensatorelektroden nicht statisch angelegt, sondern getaktet.

Zur Vereinfachung der Diskussion sei eine völlige Symmetrie in den Abständen der Kondensatorelektroden F1, F2, B zueinander, aber eine Asymmetrie der parasitären Kapazitäten angenommen, so daß ein Nullpunktabgleich erforderlich ist.

Die in der Erfassungsrichtung S wirkende resultierende Kraft auf die bewegliche dritte Kondensatorelektrode B bei den gemäß Fig. 1 angelegten elektrischen Potentialen V_{F1}, V_{B}, V_{F2}, V_{S} sei Null.

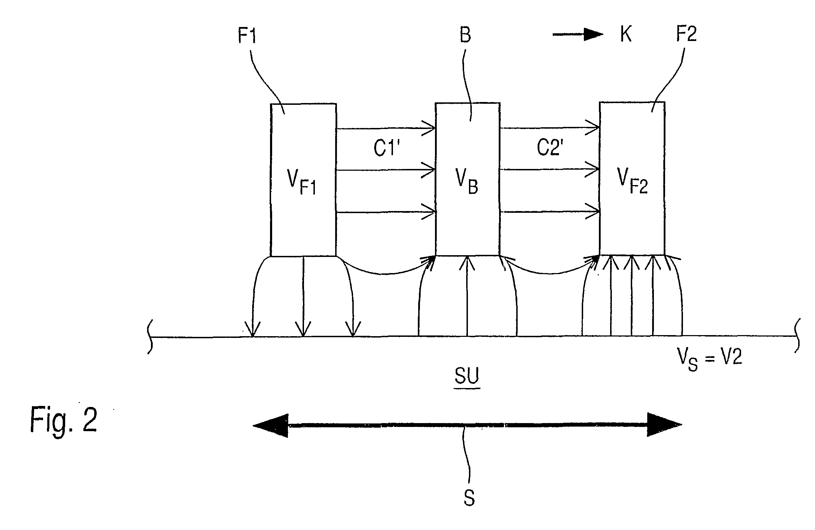

Fig. 2 zeigt eine partielle Schnittdarstellung von dem Beschleunigungssensor gemäß der Ausführungsform der vorliegenden Erfindung bei einem ersten Substratpotential.

Wird nun das elektrische Potential V_{S} des Substrats SU von V1 = 2,5 V auf V2 = 3 V verändert, so kann je nach Änderungsrichtung durch eine entstehende unsymmetrische laterale Feldlinienverteilung eine kleine elektrische Kraft K in einer Erfassungsrichtung S auf die bewegliche Kondensatorelektrode B ausgeübt werden. Mit anderen Worten werden durch die Veränderung des elektrischen Potentials V_{S} des Substrats SU von V1 = 2,5 V auf V2 = 3 V die elektrischen Feldlinien verzerrt, was zu der resultierenden Kraft K führt.

Diese Kraft K führt zu einer lateralen Auslenkung der beweglichen Kondensatorelektrode B und damit zu einer Vereinstimmung der Kapazitätwerte C1, C2 auf neue Kapazitätwerte C1', C2' von beiden Kondensatoren F1, B; B, F2 und somit zu einer Veränderung des Nullpunkts am Ausgang der Differenzkapazitäts-Erfassungseinrichtung.

Für ein elektrisches Potential V_{S} des Substrats SU, dass niedriger läge als dasjenige der beweglichen Kondensatorelektrode B, ergäbe sich eine Kraft in der entgegengesetzten Richtung im Vergleich zu Figur 2.

Wesentlich dabei ist, dass das elektrische Potential V_{S} des Substrat SU dabei vollkommen unabhängig vom Signalverstärkungspfad variiert werden kann, und somit die beim Stand der Technik auftretenden Nachteile vermieden werden können.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

In den obigen Beispielen ist der erfindungsgemäße Beschleunigungssensor in einfachen Formen zur Erläuterung seiner Grundprinzipien erläutert worden. Kombinationen der Beispiele und wesentlich kompliziertere Ausgestaltungen unter Verwendung derselben Elemente bzw. Verfahrensschritte sind selbstverständlich denkbar.

Es können auch beliebige mikromechanische Grundmaterialien verwendet werden, und nicht nur das hiermit exemplarisch angeführte Siliziumsubstrat.

## Patentansprüche

1. Verfahren zum elektrischen Nullpunktabgleich für ein mikromechanisches Bauelement mit einer ersten über einem Substrat (SU) fest aufgehängten Kondensatorelektrode (F1), einer zweiten über dem Substrat (SU) fest aufgehängten Kondensatorelektrode (F2) und einer dritten dazwischen angeordneten über dem Substrat (SU) federnd auslenkbar aufgehängten Kondensatorelektrode (B), und einer Differenzkapazitäts-Erfassungseinrichtung zum Erfassen einer Differenzkapazität der Kapazitäten (C1, C1'; C2, C2') der derart gebildeten veränderlichen Kondensatoren (F1, B; B, F2) mit den Schritten:
Anlegen eines ersten elektrischen Potentials (V_{F1}) an die erste Kondensatorelektrode (F1);
Anlegen eines zweiten elektrischen Potentials (V_{F2}) an die zweite Kondensatorelektrode (F2); und
Anlegen eines dritten elektrischen Potentials (V_{B}) an die dritte Kondensatorelektrode (B); und
Anlegen eines vierten elektrischen Potentials (V_{S}) an das Substrat (SU);
**dadurch gekennzeichnet, daß**
das an das Substrat (SU) angelegte vierte elektrische Potential (V_{S}) zum elektrischen Nullpunktabgleich für den Betrieb der Differenzkapazitäts-Erfassungseinrichtung verändert wird.

2. Verfahren nach Anspruch 1, **dadurch gekennzeichnet, daß** die zur Differenzkapazitäts-Erfassung erforderlichen Potentiale (V_{F1}, V_{B}, V_{F2}, V_{S}) getaktet angelegt werden.

3. Verfahren nach Anspruch 1, **dadurch gekennzeichnet, daß** das mikromechanische Bauelement eine Interdigital-Kondensatoreinrichtung mit einer Vielzahl von beweglichen und festen Kondensatorelektroden aufweist.

4. Vorrichtung zum elektrischen Nullpunktabgleich für ein mikromechanisches Bauelement mit einer ersten über einem Substrat (SU) fest aufgehängten Kondensatorelektrode (F1), einer zweiten über dem Substrat (SU) fest aufgehängten Kondensatorelektrode (F2) und einer dritten dazwischen angeordneten über dem Substrat (SU) federnd auslenkbar aufgehängten Kondensatorelektrode (B), und einer Differenzkapazitäts-Erfassungseinrichtung zum Erfassen einer Differenzkapazität der Kapazitäten (C1, C1'; C2, C'2') der derart gebildeten veränderlichen Kondensatoren (F1, B; B, F2) mit:
einer Potentialversorgungseinrichtung zum Anlegen eines ersten elektrischen Potentials (V_{F1}) an die erste Kondensatorelektrode (F1); zum Anlegen eines zweiten elektrischen Potentials (V_{F2}) an die zweite Kondensatorelektrode (F2); zum Anlegen eines dritten elektrischen Potentials (V_{B}) an die dritte Kondensatorelektrode (B); und zum Anlegen eines vierten elektrischen Potentials (V_{S}) an das Substrat (SU);
**dadurch gekennzeichnet, daß**
die Potentialversorgungsineinrichtung derart gestaltet ist, daß sie das an das Substrat (SU) angelegte vierte elektrische Potential (V_{S}) zum elektrischen Nullpunktabgleich für den Betrieb der Differenzkapazitäts-Erfassungseinrichtung verändern kann.

5. Vorrichtung nach Anspruch 4, **dadurch gekennzeichnet, daß** die zur Differenzkapazitäts-Erfassung erforderlichen Potentiale (V_{F1}, V_{B}, V_{F2}, V_{S}) getaktet anlegbar sind.

6. Verfahren nach Anspruch 4, **dadurch gekennzeichnet, daß** das mikromechanische Bauelement eine Interdigital-Kondensatoreinrichtung mit einer Vielzahl von beweglichen und festen Kondensatorelektroden aufweist.

## Claims

1. Method for electrical zero balancing for a micromechanical component having a first capacitor electrode (F1) fixedly suspended above a substrate (SU), a second capacitor electrode (F2) fixedly suspended above the substrate (SU), and a third capacitor electrode (B), arranged in between and suspended in a resiliently deflectable manner above the substrate (SU), and a differential capacitance detecting device for detecting a differential capacitance of the capacitances (C1, C1'; C2, C2') of the variable capacitors (F1, B; B, F2) formed in this way, having the steps of:
applying a first electrical potential (V_{F1}) to the first capacitor electrode (F1);
applying a second electrical potential (V_{F2}) to the second capacitor electrode (F2); and
applying a third electrical potential (V_{B}) to the third capacitor electrode (B); and
applying a fourth electrical potential (V_{S}) to the substrate (SU);
**characterized in that**
the fourth electrical potential (V_{S}) applied to the substrate (SU) is altered for the purpose of the electrical zero balancing for the operation of the differential capacitance detecting device.

2. Method according to Claim 1, **characterized in that** the potentials (V_{F1}, V_{B}, V_{F2}, V_{S}) required for the detection of the differential capacitance are applied in clocked fashion.

3. Method according to Claim 1, **characterized in that** the micromechanical component has an interdigital capacitor device with a multiplicity of movable and fixed capacitor electrodes.

4. Device for electrical zero balancing for a micromechanical component having a first capacitor electrode (F1) fixedly suspended above a substrate (SU), a second capacitor electrode (F2) fixedly suspended above the substrate (SU), and a third capacitor electrode (B), arranged in between and suspended in a resiliently deflectable manner above the substrate (SU), and a differential capacitance detecting device for detecting a differential capacitance of the capacitances (C1, C1'; C2, C2') of the variable capacitors (F1, B; B, F2) formed in this way, having:
a potential supply device for applying a first electrical potential (V_{F1}) to the first capacitor electrode (F1); for applying a second electrical potential (V_{F2}) to the second capacitor electrode (F2); for applying a third electrical potential (V_{B}) to the third capacitor electrode (B); and for applying a fourth electrical potential (V_{S}) to the substrate (SU);
**characterized in that**
the potential supply device is conveyed in such a way that it can alter the fourth electrical potential (V_{S}) applied to the substrate (SU) for the purpose of the electrical zero balancing for the operation of the differential capacitance detecting device.

5. Device according to Claim 4, **characterized in that** the potentials (V_{F1}, V_{B}, V_{F2}, V_{S}) required for the detection of the differential capacitance can be applied in clocked fashion.

6. Device according to Claim 4, **characterized in that** the micromechanical component has an interdigital capacitor device with a multiplicity of movable and fixed capacitor electrodes.

## Revendications

1. Procédé de réglage électrique du zéro pour un composant micromécanique doté d'une première électrode de condensateur (F1) accrochée fixement sur un substrat (SU), d'une deuxième électrode de condensateur (F2) accrochée fixement sur un substrat (SU) et d'une troisième électrode de condensateur (B) accrochée via le substrat (SU) avec pivotement élastique possible et disposée entre les deux premières, et dispositif de détection de la capacité différentielle pour détecter une capacité différentielle des capacités (C1, C1' ; C2, C2') des condensateurs modifiables (F1, B ; B, F2) configurés par les étapes consistant à :
poser un premier potentiel électrique (V_{F1}) sur la première électrode de condensateur (F1) ;
poser un deuxième potentiel électrique (V_{F2}) sur la deuxième électrode de condensateur (F2) ;
poser un troisième potentiel électrique (V_{B}) sur la troisième électrode de condensateur (B) ; et
poser un quatrième potentiel électrique (V₃) sur le substrat (SU) ;
**caractérisé en ce que**
le quatrième potentiel électrique (V₃) posé sur le substrat (SU) est modifié afin de régler électriquement le zéro pour le fonctionnement du dispositif de détection de la capacité différentielle.

2. Procédé selon la revendication 1,
**caractérisé en ce que**
les potentiels (V_{F1}, V_{B}, V_{F2}, V_{S}) requis pour la détection de la capacité différentielle sont posés de manière synchronisée.

3. Procédé selon la revendication 1,
**caractérisé en ce que**
le composant micromécanique présente un dispositif de condensateur internumérique doté d'un grand nombre d'électrodes de condensateur fixes et mobiles.

4. Dispositif de réglage électrique du zéro pour un composant micromécanique doté d'une première électrode de condensateur (F1) accrochée fixement sur un substrat (SU), d'une deuxième électrode de condensateur (F2) accrochée fixement sur un substrat (SU) et d'une troisième électrode de condensateur (B) accrochée sur le substrat (SU) avec pivotement élastique possible et disposée entre les deux premières, et dispositif de détection de la capacité différentielle pour détecter une capacité différentielle des capacités (C1, C1'; C2, C2') des condensateurs modifiables (F1, B ; B, F2) configurés avec :
un dispositif d'alimentation en potentiel pour la pose d'un premier potentiel électrique (V_{F1}) sur la première électrode de condensateur (F1) ; pour la pose d'un deuxième potentiel électrique (V_{F2}) sur la deuxième électrode de condensateur (F2) ; pour la pose d'un troisième potentiel électrique (V_{B}) sur la troisième électrode de condensateur (B) ; et pour la pose d'un quatrième potentiel électrique (V_{S}) sur le substrat (SU) ;
**caractérisé en ce que**
le dispositif d'alimentation en potentiel est configuré de manière à pouvoir modifier le quatrième potentiel (V_{S}) électrique posé sur le substrat (SU) pour le réglage électrique à zéro pour le fonctionnement du dispositif de détection de la capacité différentielle.

5. Dispositif selon la revendication 4,
**caractérisé en ce que**
les potentiels (V_{F1}, V_{B}, V_{F2}, V_{S}) requis pour la détection des capacités différentielles peuvent être posés de manière synchronisée.

6. Procédé selon la revendication 4,
**caractérisé en ce que**
le composant micromécanique présente un dispositif de condensateur internumérique doté d'un grand nombre d'électrodes de condensateur mobiles et fixes.
